# EUROPÄISCHE PATENTANMELDUNG

(11) **EP 1 031 377 A2**
(43) Veröffentlichungstag der Anmeldung: **30.08.2000**
(21) Anmeldenummer: 00103866.0
(22) Anmeldetag: 24.02.2000
(51) Int. Cl.: B01J 23/58, B01J 23/63, B01J 37/025, B01J 35/04, B01D 53/94

(54) **Katalysatormaterial und Verfahren zu seiner Herstellung**

(30) Priorität: 26.02.1999 DE 19908394
(71) Anmelder: Degussa-Hüls Aktiengesellschaft, 60287 Frankfurt am Main (DE)
(72) Erfinder: Domesle, Rainer, Dr., 63755 Alzenau-Kälberau (DE); Göbel, Ulrich, Dr., 65795 Hattersheim (DE); Mussmann, Lothar, Dr., 63067 Offenbach (DE); Lox, Egbert, Dr., 63403 Hanau (DE); Kreuzer, Thomas, Dr., 61184 Karben (DE)

(57) **Zusammenfassung**

Die vorliegende Erfindung betrifft ein pulverförmiges Katalysatormaterial auf der Basis von Aluminiumoxid, welches neben Aluminiumoxid noch wenigstens ein basisches Metalloxid sowie wenigstens ein Edelmetall der Platingruppe des Periodensystems der Elemente enthält. Das Katalysatormaterial ist dadurch erhältlich, daß ein bereits durch basische Oxide stabilisiertes Trägermaterial durch erneutes Imprägnieren mit weiteren basischen Oxiden beladen wird. Nach Trocknen und Calcinieren dieses nachimprägnierten Materials bei Temperaturen unterhalb von 800°C werden die katalytisch aktiven Edelmetalle ebenfalls durch Imprägnieren in das Trägermaterial eingebracht.

## Beschreibung

Die Erfindung betrifft ein pulverförmiges Katalysatormaterial auf der Basis von Aluminiumoxid, welches neben Aluminiumoxid noch wenigstens ein basisches Metalloxid sowie wenigstens ein Edelmetall der Platingruppe des Periodensystems der Elemente enthält. Das erfindungsgemäße Katalysatormaterial weist eine hervorragende Temperaturstabilität bei hoher Oberfläche und hoher, alterungsstabiler Dispersion der katalytisch aktiven Komponenten auf. Es eignet sich besonders für die Anfertigung von Katalysatoren für die Abgasreinigung von Verbrennungskraftmaschinen.

Aluminiumoxid wird häufig als Trägermaterial für die katalytisch aktiven Edelmetalle der Platingruppe verwendet. Es ist in sogenannten hochoberflächigen Modifikationen erhältlich, auf deren Oberfläche sich die Edelmetalle der Platingruppe mit hoher Dispersion abscheiden lassen.

Hochoberflächige Materialien im Rahmen dieser Erfindung sind Materialien mit einer spezifischen Oberfläche von mehr als 10 m²/g, ermittelt durch Auswertung von Stickstoffadsorptionsisothermen nach DIN 66132. Aluminiumoxide, die diese Bedingung erfüllen, werden als aktive Aluminiumoxide bezeichnet. Zu ihnen gehören chi-, kappa-, gamma-, delta-, theta- und eta-Aluminiumoxid (siehe Ullmann's Encyclopedia of Industrial Chemistry, Vol A1, 561-562, 1985).

Zur optimalen Ausnutzung der katalytischen Aktivität der teuren Platingruppenmetalle ist es erforderlich, sie in hoher Dispersion auf dem Trägermaterial abzuscheiden. Angestrebt werden Kristallitgrößen der Edelmetallpartikel auf der Oberfläche des Trägermaterials zwischen 1 und 10 nm. Die Edelmetalle werden zum Beispiel durch Imprägnieren des Trägermaterials mit wäßrigen Lösungen von Vorläuferverbindungen der Edelmetalle abgeschieden. Anschließend wird das imprägnierte Material getrocknet und zur Zersetzung der Edelmetallverbindungen, gegebenenfalls unter reduzierenden Bedingungen, calciniert.

Für die spätere Anwendung in katalytischen Prozessen sind vier Eigenschaften des so erhaltenen Katalysatormaterials von großer Bedeutung:
a) die Oberfläche des Materials, gemessen als spezifische BET-Oberfläche nach DIN 66132;
b) die Beständigkeit der kristallografischen Struktur und Oberfläche des Trägermaterials gegenüber den Belastungen beim katalytischen Prozeß, insbesondere gegenüber hohen Temperaturen;
c) die Dispersion der katalytisch aktiven Komponenten auf der Oberfläche des Trägermaterials;
d) die Beständigkeit der Dispersion der katalytisch aktiven Komponenten gegenüber den Belastungen beim katalytischen Prozeß, insbesondere gegenüber hohen Temperaturen;

Zur Stabilisierung der kristallografischen Struktur und der Oberfläche von als Trägermaterial verwendetem Aluminiumoxid wird es häufig mit basischen Metalloxiden wie zum Beispiel Bariumoxid und Lanthanoxid, Ceroxid oder anderen Seltenerdoxiden oder Mischungen dieser Oxide dotiert. Hierdurch wird die Umwandlung in das thermisch stabile aber oberflächenarme alfa-Aluminiumoxid verlangsamt. Die hierfür notwendigen Mengen der Dotierungskomponenten liegen bei 1 bis 10 Gew.%, bezogen auf das Gesamtgewicht des dotierten Aluminiumoxids.

Die US 3,867,312 beschreibt die Herstellung eines Trägermaterials auf der Basis von Aluminiumoxid, welches Oxide der Lanthaniden in gleichförmiger Verteilung im Trägermaterial enthält. Hierdurch wird die Phasenumwandlung des Aluminiumoxids verlangsamt. Die Oxide der Lanthaniden können in Konzentrationen von 1 bis 45 Gew.-%, bezogen auf Aluminiumoxid, im Trägermaterial vorliegen. Das Trägermaterial wird zum Beispiel dadurch erhalten, daß Lanthanacetat und Aluminiumnitrat durch Erhitzen miteinander verschmolzen und durch weitere Temperaturerhöhung auf 600°C in die Oxide überführt werden.

Die US 4,170,573 beschreibt ein Katalysatormaterial in Form eines Trägermaterials aus Ceroxid, Lanthanoxid und Aluminiumoxid, auf welchem Platingruppenmetalle abgeschieden sind. Zur Herstellung des Trägermaterials wird aktives Aluminiumoxid mit einer Lösung von Lanthannitrat imprägniert, getrocknet und eine Stunde bei einer Bettemperatur zwischen 1223 und 1253°C calciniert. Anschließend wird das Material in ähnlicher Weise mit einer wäßrigen Lösung von Cernitrat imprägniert, getrocknet und calciniert. Auf diesem Trägermaterial werden die katalytisch aktiven Edelmetalle unter Verwendung von Ammonium-Sulfito-Komplexen dieser Metalle abgeschieden. Die Oberfläche der auf diese Weise hergestellten Materialien beträgt weniger als 50 m²/g.

Die EP 0 170 841 A1 beschreibt einen Katalysator, welcher auf einem Aluminiumoxid-Trägermaterial 1 bis 10 Gew.-% Lanthanoxid als Stabilisator, 1 bis 20 Gew.-% Ceroxid als Promotor, wenigstens 0,5 bis 5 Gew.-% eines Alkalimetalloxides als Promotor und ein oder mehrere Platingruppenmetalle aufweist. Lanthanoxid und die Promotoren werden in das in Form von Pellets vorliegende Trägermaterial durch Imprägnieren eingebracht. Nach dem Imprägnieren der Pellets mit einem Salz des Lanthans wird der Träger zur Überführung des Salzes in Lanthanoxid und zur thermischen Stabilisierung bei Temperaturen zwischen 800 und 1100°C calciniert.

Die EP 0 171 640 A2 beschreibt einen Katalysator, der ein Kompositmaterial aus Aluminiumoxid, Lanthanoxid, Ceroxid und wenigsten einem Platingruppenmetall enthält. Lanthan und Cer werden sequentiell durch Imprägnieren mit Lanthannitrat und Cernitrat in das Aluminiumoxid eingebracht und durch anschließendes Calcinieren bei wenigstens 983°C in die Oxide überführt. Das resultierende Material hat eine Oberfläche von weniger als 50 m²/g.

Ein weiteres Verfahren zur Herstellung eines temperaturstabilen Trägermaterials auf der Basis von Aluminiumoxid stellt das Sol-Gel-Verfahren dar. Diese Verfahren liefert durch Co-Präzipitation von oxidischen Aerogelen von Aluminium und Seltenenerden eine auf atomarer Ebene homogene Verteilung von Aluminium und Seltenenerden. Diese Materialien weisen ein über das gesamte Feststoffvolumen konstantes Massenverhältnis von Aluminiumoxid zu Seltenerdoxid auf. Durch anschließende Calcinierung wird das erhaltene hochdisperse Kompositmaterial stabilisiert. Die mit diesem Verfahren erzielbaren Oberflächen liegen bei guter Temperaturstabilität wesentlich höher als bei den zuvor beschriebenen Imprägnierverfahren. Typische Werte liegen bei 100 bis 300 m²/g.

Die Eigenschaften der bekannten Verfahren zur Herstellung eines stabilisierten Trägermaterials auf der Basis von Aluminiumoxid können also wie folgt charakterisiert werden:
- Zur Stabilisierung von Aluminiumoxid durch Imprägnieren mit zum Beispiel Lanthanoxid, muß das imprägnierte Material bei Temperaturen über 800°C calciniert werden, um durch Diffusion den Gittereinbau des Lanthans in der Tiefe der Partikel des Aluminiumoxids zu ermöglichen. Das resultierende Material weist in der Regel Oberflächen von weniger als 50 m²/g und eine im wesentlichen homogene Verteilung des Dotierungselementes über den Querschnitt der Aluminiumoxidpartikel auf.
- Die Herstellung eines stabilisierten Trägermaterials auf der Basis von Aluminiumoxid durch Co-Präzipitation liefert ein Trägermaterial mit wesentlich höheren Oberflächen als durch das Imprägnierverfahren. Das Dotierungselement ist sehr homogen über den Querschnitt der Trägerpartikel verteilt.

Auf diesen stabilisierten Trägermaterialien werden die katalytisch aktiven Komponenten zumeist durch Imprägnieren aufgebracht. Wichtig ist hierbei die Erzeugung einer hohen Dispersion der katalytisch aktiven Komponenten, die auch gegenüber hohen Temperaturbelastungen eine gute Stabilität aufweist. Dies ist bei den bekannten Trägermaterialien nicht immer gewährleistet. Insbesondere ist häufig eine Kornvergrößerung der Edelmetallpartikel durch Diffusion der Partikel auf der Oberfläche und Zusammenlagern zu beobachten, so daß die katalytische Aktivität dieser Materialien durch hohe Temperaturen vermindert wird.

Es ist daher Aufgabe der vorliegenden Erfindung, ein Katalysatormaterial auf der Basis von Aluminiumoxid zur Verfügung zu stellen, welches eine hohe Oberfläche und eine hohe Dispersion der katalytisch aktiven Komponenten aufweist. Die Temperaturstabilität der Oberfläche des Trägermaterials und der Dispersion der katalytisch aktiven Komponenten soll gegenüber herkömmlichen Materialien verbessert sein. Ein weiterer Gegenstand der Erfindung ist das Herstellverfahren für das erfindungsgemäße Katalysatormaterial.

Diese Aufgabe wird gelöst durch ein pulverförmiges Katalysatormaterial auf der Basis von Aluminiumoxid, welches neben Aluminiumoxid noch wenigstens ein basisches Metalloxid sowie als katalytisch aktive Komponenten wenigstens ein Edelmetall der Platingruppe des Periodensystems der Elemente enthält, wobei Aluminiumoxid und die basischen Metalloxide ein Kompositmaterial bilden, welches als Trägermaterial für die katalytisch aktiven Komponenten dient. Das Katalysatormaterial ist durch die folgenden Venfahrensschritte erhältlich:
a) Bereitstellen eines mit basischen Oxiden stabilisierten pulverförmigen Aluminiumoxids als Trägermaterial, welches eine spezifische Oberfläche von mehr als 80 m²/g aufweist,
b) Imprägnieren des Trägermaterials mit einer Lösung wenigstens einer Vorläuferverbindung der Erdalkali- und Seltenerdmetalle,
c) Trocknen des imprägnierten Trägermaterials und Calcinieren bei Temperaturen unterhalb von 800°C,
d) Wiederholen der Verfahrensschritte b) und c) bis die gewünschte Beladung mit den basischen Oxiden erreicht ist und
e) erneutes Imprägnieren des erhaltenen Materials mit einer Lösung von Vorläuferverbindungen der katalytisch aktiven Edelmetalle sowie
f) abschließendes Trocknen und Calcinieren.

Das erfindungsgemäße Katalysatormaterial wird also dadurch erhalten, daß ein bereits durch basische Oxide stabilisiertes Trägermaterial nachträglich erneut mit Vorläuferverbindungen von basischen Oxiden imprägniert wird.

Unter der Formulierung 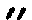 stabilisiertes Aluminiumoxid" wird im Rahmen dieser Erfindung ein aus dem Stand der Technik bekanntes Material verstanden, dessen kristallografische Struktur und spezifische Oberfläche durch Dotieren mit basischen Oxiden gegenüber hohen Temperaturen stabilisiert ist. Bevorzugt handelt es sich hierbei um ein mit 1 bis 10 Gew.-% Lanthanoxid dotiertes aktives Aluminiumoxid. Wie eingangs erläutert, ist ein solches Material durch Imprägnieren mit Vorläuferverbindungen der basischen Oxide und anschließende Calcinierung bei Temperaturen oberhalb von 800°C erhältlich. Das so erhaltene Material zeichnet sich durch eine im wesentlichen homogene Verteilung der Dotierungselemente über den Querschnitt der Pulverpartikel aus. Alternativ sind solche Materialien auch durch Co-Präzipitationsverfahren erhältlich. Diese Materialien zeichnen sich ebenfalls durch eine homogene Verteilung der Dotierungselemente über den Querschnitt der Pulverpartikel aus. Wegen der Forderung nach einer Oberfläche von wenigstens 80 m²/g kommen als Ausgangsmaterial für das erfindungsgemäße Katalysatormaterial bevorzugt nur die durch Co-Präzipitation erhaltenen stabilisierten Aluminiumoxide in Frage.

Für die Nachimprägnierung von Verfahrensschritt b) werden bevorzugt wäßrige Imprägnierlösungen eingesetzt, aber auch organische Lösungen sind verwendbar. Nach dem Imprägnieren von Schritt b) wird das Material bei erhöhter Temperatur von zum Beispiel 100 bis 200°C getrocknet und zur Überführung der Vorläuferverbindungen in die basischen Oxide bei Temperaturen unterhalb von 800°C calciniert. Der Zweck dieses Calcinierschrittes ist die Überführung der Vorläuferverbindungen in die entsprechenden Oxide und nicht eine forcierte thermische Diffusion der Dotierungselemente in das Gitter des Aluminiumoxids. Bevorzugt werden deshalb Temperaturen von weniger als 700°C angewendet. Die geeignete Calciniertemperatur hängt von den eingesetzten Vorläuferverbindungen ab und kann zum Beispiel bei der Verwendung von Nitraten auf 600 bis 500°C abgesenkt werden.

Nach dem derzeitigen Verständnis der Erfindung wird durch diese Maßnahmen eine erhöhte Konzentration der basischen Oxide an der Oberfläche des Trägermaterials erzeugt. Diese basischen Oxide führen zu einer erhöhten Konzentration von Hydroxylgruppen an der Oberfläche, welche für die anschließend in Verfahrensschritt d) aufzubringenden Vorläuferverbindungen der katalytisch aktiven Edelmetalle als Andockstellen dienen und zu einer stabilen Verankerung der Edelmetallpartikel auf der Oberfläche nach der abschließenden Calcinierung von Verfahrensschritt e) führen. Das Resultat dieser Maßnahmen ist ein Katalysatormaterial mit einer hohen Temperaturstabilität des Trägers sowie einer hohen Dispersion der katalytisch aktiven Edelmetalle und einer sehr guten Alterungs- oder Temperaturstabilität dieser Dispersion infolge der verminderten Mobilität der Edelmetallpartikel auf der Oberfläche des Trägers.

Das erfindungsgemäße Katalysatormaterial weist bevorzugt eine spezifische BET-Oberfläche, gemessen nach DIN 66132, von mehr als 80 m²/g auf. Sein totales Porenvolumen beträgt zwischen 0,3 und 0,9 ml/g.

Das in Schritt a) bereitgestellte, stabilisierte Aluminiumoxid kann die verschiedenen Kristallstrukturen der Übergangsoxide des Aluminiumoxids besitzen. Zur Stabilisierung dieser Eigenschaften enthält das Aluminiumoxid basische Oxide bevorzugt in Konzentrationen zwischen 0,5 und 20 Gew.-%, bezogen auf das Gesamtgewicht des stabilisierten Aluminiumoxids, beziehungsweise Trägermaterials.

Durch die nachträgliche Imprägnierung werden die zusätzlichen basischen Oxide bevorzugt in einer Konzentration von 0,5 bis 15 Gew.-%, bezogen auf das Gesamtgewicht des Trägermaterials, abgeschieden, so daß der Gesamtgehalt des Trägermaterials an basischen Oxiden 1 bis 35 Gew.-% beträgt.

Im erfindungsgemäßen Katalysatormaterial können verschiedene basische Oxide miteinander kombiniert werden, das heißt die zur Stabilisierung des Ausgangsmaterials verwendeten basischen Oxide müssen nicht mit den in den Verfahrensschritten b) und c) auf dem Trägermaterial abgeschiedenen Oxiden identisch sein.

Das erfindungsgemäße Katalysatormaterial ist bevorzugt mit basischen Oxiden der Erdalkali- und Seltenerdoxide, insbesondere mit den Oxiden der Elemente Magnesium, Calcium, Strontium, Barium, Lanthan, Cer, Praseodym, Neodym, Samarium, Europium, Terbium und Ytterbium, stabilisiert und dotiert. Diese Oxide können einzeln oder in Mischung vorliegen. Besonders vorteilhaft ist die Stabilisierung und Dotierung des Aluminiumoxids mit Oxiden des Lanthans, Cers oder Mischungen davon.

Als Vorläuferverbindungen der basischen Oxide kommen alle löslichen Verbindungen der Erdalkali- und Seltenerdmetalle in Betracht. Hierzu gehören lösliche organische Komplexverbindungen, Acetate, Nitrate und Chloride. Bevorzugt werden organische Komplexverbindungen, Acetate und Nitrate eingesetzt, die unter Anwendung bekannter Imprägnierverfahren auf dem behandelten Trägermaterial abgeschieden werden. Bevorzugt wird das Verfahren der Porenvolumenimprägnierung eingesetzt, bei dem die Vorläuferverbindungen in einem Lösungsmittelvolumen gelöst werden, welches etwa 60 bis 110% der Aufnahmekapazitat des vorgelegten Trägermaterials entspricht. Sollte die Löslichkeit der Vorläuferverbindung nicht ausreichen, um die gewünschte Menge in einem Schritt aufzubringen, so kann die Imprägnierung mehrfach wiederholt werden, bis die gewünschte Menge auf dem Trägermaterial abgeschieden ist.

Zur Aufbringung der katalytisch aktiven Edelmetalle können ebenfalls bekannte Imprägniertechniken eingesetzt werden, wobei auch für die Edelmetalle das Verfahren der Porenvolumenimprägnierung bevorzugt wird. Erfindungsgemäß werden als Edelmetalle die Metalle der Platingruppe verwendet, insbesondere Platin, Palladium, Rhodium und Iridium, die einzeln oder in unterschiedlichen Kombinationen und Mischungsverhältnissen in Konzentrationen von 0,01 bis 5 Gew.-%, bezogen auf das Gesamtgewicht des Katalysatormaterials, abgeschieden werden.

Wie schon erläutert, weist das erfindungsgemäße Katalysatormaterial eine erhöhte Konzentration der basischen Oxide an der Oberfläche auf. Untersuchungen mit der Sekundärionen-Massenspektrometrie (SIMS) haben gezeigt, daß insbesondere in einer äußeren Randzone von weniger als 100 Atomlagen Dicke die Konzentration der die basischen Oxide bildenden Metalle relativ zum Aluminium um wenigsten 20% größer ist als in einer Tiefe von mehr als 100 Atomlagen Dicke.

Dementsprechend ist ein weiterer Gegenstand der Erfindung ein pulverförmiges Katalysatormaterial auf der Basis von Aluminiumoxid, welches neben Aluminiumoxid noch wenigstens ein basisches Metalloxid sowie als katalytisch aktive Komponenten wenigstens ein Edelmetall der Platingruppe des Periodensystems der Elemente enthält, wobei Aluminiumoxid und die basischen Metalloxide ein Kompositmaterial bilden, welches als Trägermaterial für die katalytisch aktiven Komponenten dient, daß dadurch gekennzeichnet ist, daß das Katalysatormaterial eine spezifische Oberfläche von mehr als 80 m²/g besitzt und das Verhältnis der SIMS-Intensitäten der die basischen Metalloxide bildenden Metalle zu Aluminium an der Oberfläche der Pulverpartikel um wenigstens 20% größer ist als in einer Tiefe von mehr als 100 Atomlagen von der Oberfläche der Partikel.

Bezüglich der Auswahl der basischen Oxide, der katalytisch aktiven Edelmetalle und der Konzentrationen gelten die schon oben gemachten Ausführungen. Insbesondere besitzt das Katalysatormaterial eine Gesamtkonzentration an basischen Oxiden zwischen 1 bis 35 Gew.-%, bezogen auf das Gesamtgewicht des Katalysatormaterials.

Die Anreicherung der basischen Oxide an der Oberfläche des Trägermaterials erhöht die Konzentration von Hydroxylgruppen an der Partikeloberfläche, die bei der Abscheidung der katalytisch aktiven Platingruppenmetalle als Andockstellen für die Vorläuferverbindungen der Platingruppenmetalle dienen. Die erhöhte Funktionalisierung der Oberfläche führt zu einer sehr hohen Dispersion der abgeschiedenen Edelmetalle und verbessert außerdem die Verankerung der abgeschiedenen Edelmetallkristallite auf der Oberfläche, so daß die Gefahr des Zusammenwachsens benachbarter Kristallite durch erhöhte Mobilität bei hohen Temperaturen vermindert ist.

Die erfindungsgemäße Oberflächenanreicherung der basischen Oxide ist im wesentlichen auf eine sehr dünne Randzone von wenigen Atomdurchmessern Dicke beschränkt. Der Konzentrationsverlauf der Elemente in der Randzone kann mit Hilfe der Sekundärionen-Massenspektrometrie (SIMS) vermessen werden. Die Anwendung der Sekundärionen-Massenspektrometrie auf die Untersuchung von Pulveroberflächen ist beschrieben in 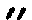 SIMS/XPS Study on the Deactivation and Reactivation of B-MFI Catalysts Used in the Vapour-Phase Beckmann Rearrangement" von P. Albers et al. Journal of Catalysis, Vol 176, 1998, 561 bis 568.

Die Messung wird wie folgt vorgenommen: Das lose Pulver wird auf einem Probenhalter in die Meßkammer des Massenspektrometers eingebracht und bis auf einen Druck von 10⁻⁸ bis 10⁻⁹ mbar evakuiert. Danach wird die Pulveroberfläche bei gleichzeitiger Ladungskompensation mit Argon-Ionen von 5 keV beschossen und dabei Atomlage für Atomlage abgetragen. Die bei diesem Vorgang emittierten Sekundärionen werden analysiert. Sie entsprechen in ihrer Verteilung zueinander der Verteilung der entsprechenden Elemente in der Probenoberfläche. Zur Normierung der Meßwerte werden die gemessenen Intensitäten der Sekundärionen zur Intensität der Aluminium-Ionen ins Verhältnis gesetzt. Dieses Vorgehen liefert ein Abbild der Elementverteilung in Abhängigkeit von der Abtragstiefe relativ zum Hauptelement des Trägermaterials.

Die Meßfläche, das heißt die mit Argon-Ionen beschossene Pulveroberfläche, beträgt 4x4 mm² und ist somit um ein Vielfaches größer als die Querschnittsfläche der einzelnen Pulverpartikel, die nur einen Durchmesser zwischen 0,1 und 50 µm aufweisen. Die Messung gibt also die mittlere Elementverteilung vieler Pulverpartikel wieder. Damit sind Zufallsergebnisse weitgehend ausgeschlossen.

Die Erfindung wird nun an Hand einiger Beispiele näher erläutert. Es zeigen:
- **Figur 1:**: SIMS-Tiefenprofil von Lanthan für das Trägermaterial 1
- **Figur 2:**: SIMS-Tiefenprofil von Lanthan für das Trägermaterial 2
- **Figur 3:**: SIMS-Tiefenprofil von Lanthan für das Trägermaterial 3
- **Figur 4:**: Temperatur für das Erreichen eines 50% Umsatzes der Kohlenwasserstoffe (HC) und Kohlenmonoxid (CO) für die Katalysatoren der Beispiele 1 bis 3 bei einer Luftzahl von 0,999 und periodischer Modulation des Luft/Kraftstoff-Verhältnisses A/F um ±0,5 mit einer Frequenz von 1 Hz (1 Hz; ±0,5 A/F).
- **Figur 5:**: Temperatur für das Erreichen eines 50% Umsatzes der Kohlenwasserstoffe (HC) und Kohlenmonoxid (CO) für die Katalysatoren der Beispiele 1 bis 3 bei einer Luftzahl von 1,05 (statisch ohne Modulation von A/F).
- **Figur 6:**: Temperatur für das Erreichen eines 50% Umsatzes der Kohlenwasserstoffe (HC) und Kohlenmonoxid (CO) für die Katalysatoren der Beispiele 1 bis 3 bei einer Luftzahl von 1,1 (statisch ohne Modulation von A/F).

Zur Herstellung von Autoabgaskatalysatoren unter Verwendung des erfindungsgemäßen Katalysatormaterials wurden folgende Trägermaterialien verwendet, beziehungsweise hergestellt:

### Trägermaterial 1:

Als Trägermaterial 1 wird ein handelsübliches mit 3 Gew.-% Lanthanoxid stabilisiertes Aluminiumoxid mit einer BET-Oberfläche im calcinierten Frischzustand von 143 m²/g verwendet.

### Trägermaterial 2:

Zur Herstellung von Trägermaterial 2 wurden 2000 g von Trägermaterial 1 mittels Porenvolumenimprägnierung mit 856 g einer Lanthan-Ethylendiamintetraacetat-Lösung mit einem Lanthanoxid-Gehalt von 2,4 Gew.-% imprägniert. Die Imprägnierlösung wies einen pH-Wert von 5 auf. Das so erhaltene Pulver wurde anschließend 12 Stunden bei 120°C getrocknet und danach 1 Stunde bei 750°C an Luft calciniert. Durch die nachträgliche Imprägnierung wurden zusätzlich 1 Gew.-% Lanthanoxid auf dem Trägermaterial abgeschieden, so daß der Gesamtgehalt des Trägermaterials an Lanthanoxid 4 Gew.-% betrug.

Durch die nachträgliche Imprägnierung verminderte sich die spezifische Oberfläche des Materials von 143 m²/g auf 131 m²/g.

### Trägermaterial 3:

Zur Herstellung von Trägermaterial 3 wurden 2000 g von Trägermaterial 1 mittels Porenvolumenimprägnierung mit 856 g einer Lanthannitrat-Lösung mit einem Lanthanoxid-Gehalt von 16 Gew.-% imprägniert. Die Imprägnierlösung wies einen pH-Wert von 4 auf. Das so erhaltene Pulver wurde anschließend 12 Stunden bei 120°C getrocknet und danach 1 Stunde bei 500°C an Luft calciniert.

Durch die nachträgliche Imprägnierung wurden zusätzlich 7 Gew.-% Lanthanoxid auf dem Trägermaterial abgeschieden, so daß der Gesamtgehalt des Trägermaterials an Lanthanoxid 10 Gew.-% betrug. Die spezifische Oberfläche des Materials verminderte sich von 143 m²/g auf 123 m²/g.

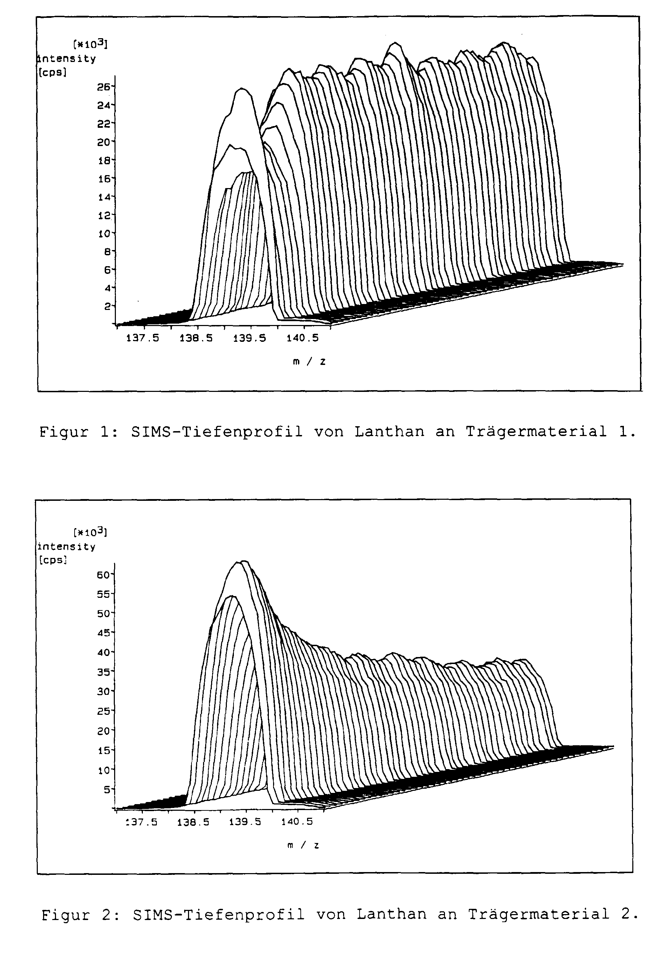

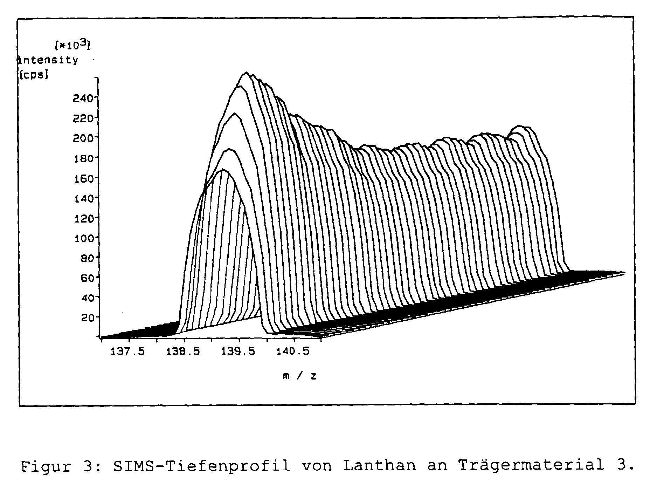

An den drei Trägermaterialien wurden SIMS-Tiefenprofile nach dem oben beschriebenen Verfahren für Lanthan und Aluminium ermittelt. Die Figuren 1 bis 3 zeigen die SIMS-Spektren für Lanthan in Abhängigkeit von der Dauer des Beschusses der Probenoberfläche mit Argon-Ionen in dreidimensionaler Darstellung. Jedes Spektrum entspricht einer bestimmten Abtragstiefe. Das letzte Spektrum dieser Darstellungen entspricht etwa einer Abtragstiefe von 100 Atomlagen.

Das Tiefenprofil von Trägermaterial 1 zeigt an der Oberfläche eine verminderte Lanthan-Konzentration die jedoch mit zunehmender Abtragstiefe in eine konstante Konzentration übergeht. Die Tiefenprofile der erfindungsgemäß hergestellten Trägermaterialien zeigen dagegen eine deutlich erhöhte Lanthan-Konzentration in einer Randzone von wenigen Atomlagen, die mit zunehmender Abtragstiefe auf einen konstanten Wert abfällt.

In Tabelle 1 sind die ermittelten SIMS-Intensitäten des Aluminiums zu den ermittelten Intensitäten des Lanthans für drei verschiedene Abtragstiefen Anfang (Oberfläche), Mitte und Ende ins Verhältnis gesetzt.

**Tabelle 1**

| Quotienten der SIMS-Intensitäten für Al/La. | | | |
|---|---|---|---|
| Meßort | Trägermaterial 1 | Trägermaterial 2 | Trägermaterial 3 |
| Anfang | 70,8 | 63,8 | 17,9 |
| Mitte | 69,7 | 101 | 19,4 |
| Ende | 75,1 | 113 | 24,0 |

Wie diese Ergebnisse zeigen ändert sich das Al/La-Verhältnis bei den erfindungsgemäß hergestellten Trägermaterialien 2 und 3 von der Oberfläche bis in eine Tiefe von etwa 100 Atomlagen um bis zum Faktor 2. Dementsprechend ist die Konzentration von Lanthan an der Oberfläche der Partikel der Trägermaterialien angereichert.

Mit Hilfe der Trägermaterialien 1 bis 3 wurden Autoabgaskatalysatoren hergestellt und ihre Anspringtemperaturen für die Umsetzung von Kohlenwasserstoffen und von Kohlenmonoxid ermittelt. Die Katalysatoren sollten als motornahe Startkatalysatoren eingesetzt werden, die sehr hohen Temperaturbelastungen im Betrieb ausgesetzt sind. Als Tragkörper für alle Katalysatoren wurden Wabenkörper aus Cordierit mit einem Volumen von 0,3 l und einer Zelldichte von 46,5 cm⁻² verwendet.

### Beispiel 1:

120 g von Trägermaterial 1 wurden mit 20 g eines Cer/Zirkon-Mischoxids (70 Gew.-% Ceroxid und 30 Gew.-% Zirkonoxid mit einer BET-Oberfläche im calcinierten Frischzustand von 87 m²/g) vermischt und mit Hilfe der Porenvolumenimprägnierung mit 0,7 g Platin und 3,2 g Palladium imprägniert. Das imprägnierte Gemisch wurde anschließend getrocknet und bei 500°C an Luft calciniert.

Dieses Pulver wurde mit Wasser zu einer wäßrigen Suspension angerührt und auf eine Partikelgröße von 3 bis 5 µm (d₅₀) vermahlen. Die oxidischen Feststoffanteile der Dispersion wurden mittels eines Tauchverfahrens auf einem der angegebenen Wabenkörper aufgetragen. Die Beladungskonzentration betrug 160 g Katalysatormaterial pro Liter Wabenkörpervolumen.

### Beispiel 2:

In gleicher Weise wie in Beispiel 1 wurde ein Katalysator unter Verwendung von Trägermaterial 2 hergestellt.

### Beispiel 3:

In gleicher Weise wie in Beispiel 1 wurde ein Katalysator unter Verwendung von Trägermaterial 3 hergestellt.

### Anwendungsbeispiel:

Alle Katalysatoren wurden vor den Messungen der Anspringtemperaturen am Motor für 4 Stunden bei 1100 °C in einer Atmosphäre bestehend aus 88 Vol.-% Stickstoff, 10 Vol.-% Wasser und 2 Vol.-% Sauerstoff gealtert.

Die Messung der Anspringtemperaturen wurden an einem Benzinmotor mit 2 l Hubraum durchgeführt. Hierzu wurden die Katalysatoren bei Luftzahlen von 0,999 (1Hz ± 0,5 A/F) und 1,05 (statisch) bzw. 1,1 (statisch) und bei Belastung mit einer Raumgeschwindigkeit von 206000 h⁻¹ kontinuierlich aufgeheizt. Während des Aufheizens wurden die Umsätze an Kohlenwasserstoffen und Kohlenmonoxid in Abhängigkeit der Temperatur erfaßt. Aus diesen Messungen wurden für die einzelnen Katalysatoren die Temperatur für einen Umsatz des jeweiligen Schadstoffes von 50% ermittelt.

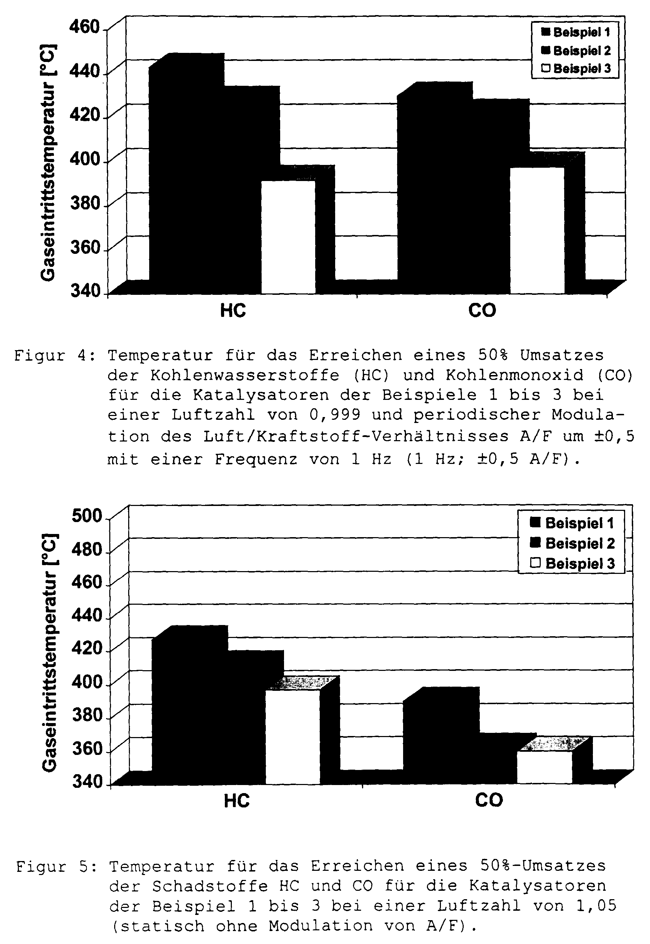

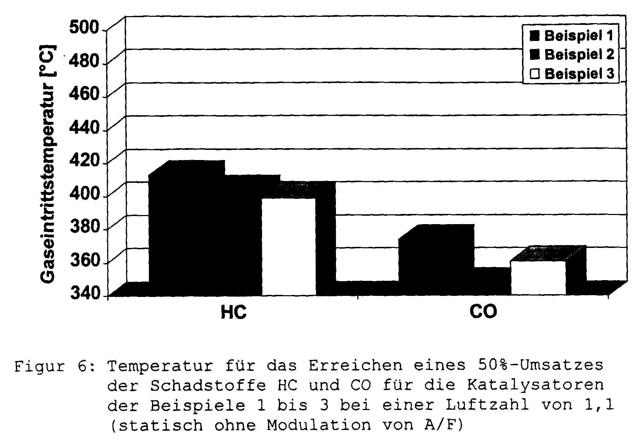

Die ermittelten Ergebnisse sind in den Figuren 4 bis 6 grafisch dargestellt. Wie diese Ergebnisse zeigen, zeichnen sich die unter Verwendung der erfindungsgemäßen Trägermaterialien hergestellten Katalysatoren der Beispiele 2 und 3 durch eine wesentlich verminderte Anspringtemperatur aus, obwohl die spezifische Oberfläche der Trägermaterialien durch die nachträgliche Imprägnierung unter der spezifischen Oberfläche des in Beispiel 1 verwendeten Trägermaterials lag.

## Patentansprüche

1. Pulverförmiges Katalysatormaterial auf der Basis von Aluminiumoxid enthaltend neben Aluminiumoxid noch wenigstens ein basisches Metalloxid sowie als katalytisch aktive Komponenten wenigstens ein Edelmetall der Platingruppe des Periodensystems der Elemente, wobei Aluminiumoxid und die basischen Metalloxide ein Kompositmaterial bilden, welches als Trägermaterial für die katalytisch aktiven Komponenten dient, erhältlich durch die folgenden Verfahrensschritte,
a) Bereitstellen eines mit basischen Oxiden stabilisierten pulverförmigen Aluminiumoxids als Trägermaterial, welches eine spezifische Oberfläche von mehr als 80 m²/g aufweist,
b) Imprägnieren des Trägermaterials mit einer Lösung wenigstens einer Vorläuferverbindung der Erdalkali- und Seltenerdmetalle,
c) Trocknen des imprägnierten Trägermaterials und Calcinieren bei Temperaturen unterhalb von 800°C,
d) Wiederholen der Verfahrensschritte b) und c) bis die gewünschte Beladung mit den basischen Oxiden erreicht ist und
e) erneutes Imprägnieren des erhaltenen Materials mit einer Lösung von Vorläuferverbindungen der katalytisch aktiven Edelmetalle sowie
f) abschließendes Trocknen und Calcinieren.

2. Katalysatormaterial nach Anspruch 1,
**dadurch gekennzeichnet**,
daß das in Schritt a) bereitgestellte Trägermaterial eine Konzentration an basischen Oxiden von 0,5 bis 20 Gew.-%, bezogen auf das Gesamtgewicht des Trägermaterials, aufweist.

3. Katalysatormaterial nach Anspruch 2,
**dadurch gekennzeichnet**,
daß die Konzentration der in Schritt b) durch Imprägnieren in das Trägermaterial zusätzlich eingebrachten basischen Oxide 0,5 bis 15 Gew.-%, bezogen auf das Gesamtgewicht des Trägermaterials, beträgt.

4. Katalysatormaterial nach Anspruch 1,
**dadurch gekennzeichnet**,
daß es sich bei den basischen Oxiden um Erdalkali- und Seltenerdoxide handelt.

5. Katalysatormaterial nach Anspruch 4,
**dadurch gekennzeichnet**,
daß es sich bei den basischen Oxiden um Lanthanoxid und/oder Ceroxid handelt.

6. Katalysatormaterial nach Anspruch 1,
**dadurch gekennzeichnet**,
daß die Edelmetalle der Platingruppe ausgewählt sind aus der Gruppe Platin, Palladium, Rhodium, Iridium und Mischungen davon, welche in einer Konzentration von 0,01 bis 5 Gew.-%, bezogen auf das Gesamtgewicht des Katalysatormaterials, vorliegen.

7. Pulverförmiges Katalysatormaterial auf der Basis von Aluminiumoxid enthaltend neben Aluminiumoxid noch wenigstens ein basisches Metalloxid sowie als katalytisch aktive Komponenten wenigstens ein Edelmetall der Platingruppe des Periodensystems der Elemente, wobei Aluminiumoxid und die basischen Metalloxide ein Kompositmaterial bilden, welches als Trägermaterial für die katalytisch aktiven Komponenten dient,
**dadurch gekennzeichnet**,
daß das Katalysatormaterial eine spezifische Oberfläche von mehr als 80 m²/g besitzt und das Verhältnis der SIMS-Intensitäten der die basischen Metalloxide bildenden Metalle zu Aluminium an der Oberfläche der Pulverpartikel um wenigstens 20% größer ist als in einer Tiefe von mehr als 100 Atomlagen von der Oberfläche der Partikel.

8. Katalysatormaterial nach Anspruch 7,
**dadurch gekennzeichnet**,
daß es sich bei den basischen Oxiden um Erdalkali- und Seltenerdoxide handelt.

9. Katalysatormaterial nach Anspruch 8,
**dadurch gekennzeichnet**,
daß es sich bei den basischen Oxiden um Lanthanoxid und/oder Ceroxid handelt.

10. Katalysatormaterial nach Anspruch 9,
**dadurch gekennzeichnet**,
daß die basischen Oxide in einer Konzentration, bezogen auf das Gesamtgewicht des Katalysatormaterial, zwischen 1 und 35 Gew.-% vorliegen.

11. Katalysatormaterial nach Anspruch 10,
**dadurch gekennzeichnet**,
daß die Edelmetalle der Platingruppe ausgewählt sind aus der Gruppe Platin, Palladium, Rhodium, Iridium und Mischungen davon, welche in einer Konzentration von 0,01 bis 5 Gew.-%, bezogen auf das Gesamtgewicht des Katalysatormaterials, vorliegen.

12. Verfahren zur Herstellung des Katalysatormaterials nach einem der vorstehenden Ansprüche,
**gekennzeichnet**
durch die folgenden Schritte
a) Bereitstellen eines mit basischen Oxiden stabilisierten pulverförmigen Aluminiumoxids als Trägermaterial, welches eine spezifische Oberfläche von mehr als 80 m²/g aufweist,
b) Imprägnieren des Trägermaterials mit einer Lösung wenigstens einer Vorläuferverbindung der Erdalkali- und Seltenerdmetalle,
c) Trocknen des imprägnierten Trägermaterials und Calcinieren bei Temperaturen unterhalb von 800°C,
g) Wiederholen der Verfahrensschritte b) und c) bis die gewünschte Beladung mit den basischen Oxiden erreicht ist und
d) erneutes Imprägnieren des erhaltenen Materials mit einer Lösung von Vorläuferverbindungen der katalytisch aktiven Edelmetalle sowie
e) abschließendes Trocknen und Calcinieren.

13. Verfahren nach Anspruch 12,
**dadurch gekennzeichnet**,
daß das in Schritt a) als Trägermaterial bereitgestellte, stabilisierte Aluminiumoxid eine Konzentration von 1 bis 20 Gew.-% an basischen Oxiden aufweist.

14. Verfahren nach Anspruch 13,
**dadurch gekennzeichnet**,
daß die durch Schritt b) in das Trägermaterial zusätzlich eingebrachten basischen Oxide 0,5 bis 15 Gew. -%, bezogen auf das Gesamtgewicht des Trägermaterials, betragen.

15. Pulverförmiges Trägermaterial auf der Basis von Aluminiumoxid enthaltend neben Aluminiumoxid noch wenigstens ein basisches Metalloxid sowie wenigstens ein Edelmetall der Platingruppe des Periodensystems der Elemente,
erhältlich durch die folgenden Verfahrensschritte,
a) Bereitstellen eines mit basischen Oxiden stabilisierten pulverförmigen Aluminiumoxids als Trägermaterial, welches eine spezifische Oberfläche von mehr als 80 m²/g aufweist,
b) Imprägnieren des Trägermaterials mit einer Lösung wenigstens einer vorläuferverbindung der Erdalkali- und Seltenerdmetalle,
c) Trocknen des imprägnierten Trägermaterials und Calcinieren bei Temperaturen unterhalb von 800°C und
d) Wiederholen der Verfahrensschritte b) und c) bis die gewünschte Beladung mit den basischen Oxiden erreicht ist.

16. Verwendung des Katalysatormaterials nach einem der Ansprüche 1 bis 11 und 15 zur Herstellung von Katalysatorbeschichtungen auf monolithischen Wabenkörpern aus Keramik oder Metall.
